Europäisches Patentamt

European Patent Office

Office européen des brevets

(11) Veröffentlichungsnummer : **0 485 812 B1**

(12) **EUROPÄISCHE PATENTSCHRIFT**

(45) Veröffentlichungstag der Patentschrift :
21.06.95 Patentblatt 95/25

(51) Int. Cl.$^6$ : **H04B 10/14**

(21) Anmeldenummer : **91118605.4**

(22) Anmeldetag : **31.10.91**

(54) **Vorrichtung für den optischen Überlagerungsempfang von Signalen.**

(30) Priorität : **15.11.90 DE 4036468**

(43) Veröffentlichungstag der Anmeldung :
**20.05.92 Patentblatt 92/21**

(45) Bekanntmachung des Hinweises auf die
Patenterteilung :
**21.06.95 Patentblatt 95/25**

(84) Benannte Vertragsstaaten :
**CH DE ES FR GB IT LI SE**

(56) Entgegenhaltungen :
**ISSLS'86,3. Oktober 1986, Tokyo,Seiten 205 -
209;BACHUS et al.: "Coherent optical multi-
channel subscriber line"
PATENT ABSTRACTS OF JAPAN, Bd. 9, Nr.
321 (E-367)(2044) 17. Dezember 1985; &
JP-A-60153230
IEEE PHOTONICS TECHNOLOGY LET-
TERS,Bd. 1, Nr. 10, Oktober 1989, Seiten 281 -
284;SUDO et al.. "Frequency stabilized DFB
laser module using 1.53159 um absorption line
of C2H2"**

(73) Patentinhaber : **Alcatel SEL
Aktiengesellschaft
Lorenzstrasse 10
D-70435 Stuttgart (DE)**
(84) **DE**
Patentinhaber : **ALCATEL N.V.
Strawinskylaan 537, (World Trade Center)
NL-1077 XX Amsterdam (NL)**
(84) **CH ES FR GB IT LI SE**

(72) Erfinder : **Heidemann, Rolf, Dr.
Weinsberger Weg 14
W-7146 Tamm (DE)**

(74) Vertreter : **Kugler, Hermann, Dipl.-Phys. et al
Alcatel SEL AG
Patent- und Lizenzwesen
Postfach 30 09 29
D-70449 Stuttgart (DE)**

**Beschreibung**

Die Erfindung betrifft einen Überlagungsempfänger nach dem Oberbegriff des Patentanspruchs 1. Außerdem betrifft sie ein optisches Nachrichtenübertragungssystem nach dem Patentanspruch 7.

Charakteristisch für Überlagerungsempfänger ist eine Mischstufe, die das Empfangssignal mit einer von einem lokalen Oszillator erzeugten Referenzwelle mischt. Ist das Empfangssignal der Mischstufe und die Referenzwelle ein optisches Signal bzw. eine optische Welle, so handelt es sich um einen optischen Überlagerungsempfänger.

Das optische Eingangssignal wird einer Mischstufe, z.B. einer PIN-Diode, zugeführt. Diese Mischstufe ist an einen optischen Oszillator angeschlossen. In der Mischstufe wird die Differenz der Frequenzen gebildet. Am Ausgang der Mischstufe steht eine Zwischenfrequenz (ZF) zur Verfügung. Vorzugsweise ist als Zwischenfrequenz-Stufe ein Zwischenfrequenz-Filter vorgesehen.

Ein solcher optischer Überlagerungsempfänger ist bekannt aus FREQUENZ, Band 41, Ausgabe 8, 1987, Seiten 201 bis 208.

Ein anderer optischer Überlagerungsempfänger, der auch die Merkmale des Oberbegriffs des Anspruchs 1 hat, ist bekannt aus: Bachus E.-J. et al, "Coherent Optical Multi-Channel Subscriber-Line", ISSLS '86, 3. Oktober 1986, Tokio, Seiten 205 bis 209.

Aus beiden ist außerdem ein optisches Nachrichtenübertragungssystem bekannt, das einen optischen Sender und einen optischen Überlagerungsempfänger hat.

Hinsichtlich der Frequenzabstimmung eines Überlagerungsempfängers sind zwei Möglichkeiten bekannt: Die erste besteht darin, daß die Zwischenfrequenz, auf die die ZF-Stufe eingestellt ist, konstant ist, während der lokale Oszillator in seiner Frequenz abstimmbar ist. Für optische Überlagerungsempfänger hat dies den Vorteil eines großen optischen Abstimmbereichs. Außerdem braucht das ZF-Filter nur auf eine feste Zwischenfrequenz abgestimmt zu sein. Nachteilig ist, daß der optische Oszillator kontinuierlich durchstimmbar auszubilden ist, was Stabilitätsschwierigkeiten mit sich bringt. Seine Linienbreite ist im allgemeinen relativ groß, so daß Phasenrauschen auftritt.

Alternativ ist es bekannt, die Frequenz des optischen Oszillators fest vorzugeben. Diese kann also nicht verändert werden. Dann ist allerdings die Zwischenfrequenz-Stufe abstimmbar, damit der optische Empfänger abstimmbar ist. Dies hat den Vorteil einer guten Stabilität des optischen Überlagerungsempfängers, jedoch den Nachteil, daß nur ein geringer optischer Abstimmbereich vorliegt.

Der Erfindung liegt daher die Aufgabe zugrunde, einen optischen Überlagerungsempfänger gemäß der eingangs genannten Art anzugeben, der die vorstehend beschriebenen Nachteile vermeidet und der bei relativ einfachem Aufbau und optimaler Abstimmungsmöglichkeit einen sehr guten Überlagerungsempfang ermöglicht. Außerdem soll ein optisches Nachrichtenübertragungssystem mit einem solchen Überlagerungsempfänger geschaffen werden, das einen optischen Sender hat, dessen Sendefrequenzen für Vielkanalübertragung günstig gewählt sind.

Diese Aufgabe wird erfindungsgemäß wie im Patentanspruch 1 angegeben gelöst.

Gemäß dieser Lösung ist der optische Oszillator also nicht kontinuierlich, sondern nur in Sprüngen (Frequenzsprüngen) abstimmbar. Die kontinuierliche Abstimmung erfolgt in der variablen ZF-Stufe. Dies hat den Vorteil, daß sich der optische Oszillator frequenzmäßig hochstabil ausbilden läßt, da die einzelnen Frequenzstufen mit hoher Stabilität realisierbar sind. Die kontinuierliche Abstimmung der variablen ZF-Stufe ist schaltungstechnisch ebenfalls optimal zu realisieren, so daß sich insgesamt ein ausgezeichneter Überlagerungsempfang von optischen Signalen erzielen läßt. Weiterbildungen der Erfindung sind in den Unteransprüchen 2 bis 6 angegeben.

Ein optisches Nachrichtenübertragungssystem mit einem Sender und einem Überlagerungsempfänger ist Gegenstand von Anspruch 7.

Die Zeichnungen veranschaulichen die Erfindungen anhand von Ausführungsbeispielen, und zwar zeigen:

Figur 1    ein Blockschaltbild eines Überlagerungsemfängers,

Figur 2    ein Diagramm zur Erläuterung des Zusammenhangs zwischen der Frequenz des Lokaloszillators, der Zwischenfrequenz und den Empfangsfrequenzen bei Überlagerungsempfängern,

Figur 3    ein Diagramm wie das nach Figur 2, das die Abstimmbarkeit der Empfangsfrequenzen durch Abstimmung der Zwischenfrequenz zeigt,

Figur 4a    ein Diagramm, das die Abstimmbarkeit des Überlagerungsempfängers gemäß der Erfindung zeigt,

Figur 4b    ein Diagramm wie das nach Figur 4a mit Angabe der in einem erfindungsgemäßen Sender belegten Sendefrequenzen,

Figur 5a    ein Diagramm, das die erfindungsgemäße Abstimmbarkeit des Überlagerungsempfänger nach einem zweiten Ausführungsbeispiel zeigt, und

Figur 5b ein Diagramm wie das nach Figur 5a mit Angabe der in einem zum erfindungsgemäßen Überlagerungsempfänger gehörenden Sender belegten Sendefrequenzen.

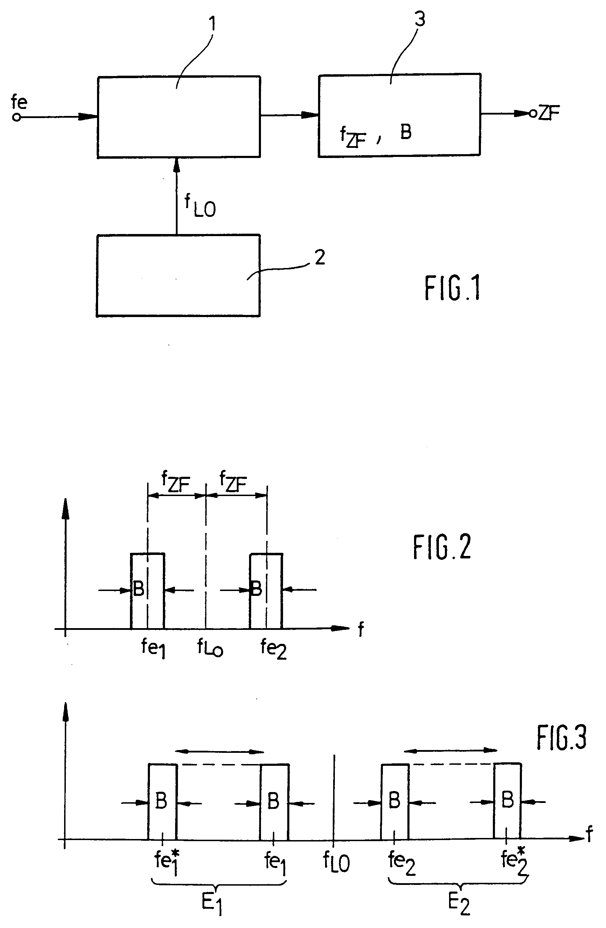

Figur 1 zeigt ein Blockschaltbild zur Erläuterung des erfindungsgemäßen Überlagerungsempfängers am Beispiel eines optischen Überlagerungsempfängers. Der optische Überlagerungsempfänger hat eine Mischstufe 1, die ein optisches Eingangssignal fe empfängt. Ferner hat er einen optischen Oszillator 2, der eine optische Welle mit einer Frequenz $f_{LO}$ liefert. Diese optische Welle wird der Mischstufe 1 zugeführt. Die Mischstufe 1 bildet ein Zwischenfrequenzsignal mit einer Frequenz $f_{ZF}$, das in ein ZF-Filter 3 eingegeben wird. Das ZF-Filter 3 bildet einen Bandpaß mit einer Breite B. Die Zwischenfrequenz ergibt sich als Differenz der beiden Eingangssignale der Mischstufe 1, wobei es gleichgültig ist, welche der beiden Eingangsfrequenzen von der jeweils anderen Frequenz subtrahiert wird. Die Zwischenfrequenz $f_{ZF}$ kann sich also ergeben aus einer Frequenz $f_{e1}$ des optischen Eingangssignals gemäß

$$f_{ZF} = f_{LO} - f_{e1}$$

oder aus einer Frequenz $f_{e2}$ des optischen Eingangssignals gemäß

$$f_{ZF} = f_{e2} - f_{LO}.$$

Somit sind, wie in Figur 2 gezeigt, die Frequenzen $f_{e1}$ und $f_{e2}$, für die der Überlagerungsempfänger empfindlich ist:

$$f_{e1} = f_{LO} - f_{ZF}$$
$$f_{e2} = f_{LO} + f_{ZF}.$$

Da das auf $f_{ZF}$ abgestimmte ZF-Filter 3 eine Bandbreite B hat, ist der Überlagerungsempfänger nach Figur 1 für Frequenzen des Empfangssignals empfindlich, die innerhalb einer Bandbreite B bei $f_{e1}$ oder bei $f_{e2}$ liegen. $f_{e1}$ nennt man die Spiegelfrequenz von $f_{e2}$ und umgekehrt.

Ist $f_{ZF}$ gemäß der oben hinsichtlich Abstimmung erwähnten ersten Alternative fest abgestimmt, was in Figur 2 angedeutet ist, und die Frequenz $f_{LO}$ des lokalen Oszillators variabel abstimmbar, so hat dies den Vorteil eines großen optischen Abstimmbereichs:

z.B. $\Delta\lambda$ = 1 nm, d.h. $\Delta f_{LO}$ = 125 GHz (bei 1550 nm).

Nachteilig bei dieser bekannten Lösung ist die Schwierigkeit, die aufgrund der kontinuierlichen Abstimmbarkeit des optischen Oszillators 2 auftritt. Diese Schwierigkeit besteht in der Frequenzstabilisierung der kontinuierlich abstimmbaren Oszillatorfrequenz.

Mit Figur 3 ist die andere bekannte Variante angedeutet, bei der die Frequenz $f_{LO}$ des Oszillators 2 auf einem bestimmten Wert festgehalten wird und die Zwischenfrequenz $f_{ZF}$ abstimmbar ist. Damit ist dann auch der gesamte optische Empfänger abstimmbar. Die Abstimmbereiche sind in der Figur 3 mit Doppelpfeilen gekennzeichnet. Ein Empfangsabschnitt ist mit $E_1$ und der diesem Empfangsabschnitt zugeordnete Spiegelfrequenzabschnitt mit $E_2$ bezeichnet. Umgekehrt ist auch $E_1$ der Spiegelfrequenzabschnitt zu $E_2$.

Bei dieser bekannten Ausgestaltung der Abstimmbarkeit eines Überlagerungsempfängers besteht der Vorteil, daß der Oszillator 2 aufgrund seiner festen Frequenz sehr gut zu stabilisieren ist. Im Hinblick auf einen optischen Überlagerungsempfänger ist jedoch nachteilig, daß nur ein geringer optischer Abstimmbereich von z.B. $|fe^*-fe|$ = 20 GHz möglich ist. Daraus folgt:

$\Delta\lambda$ = 0,16 nm (bei 1550 nm).

Mit $|fe^*-fe|$ ist die durch die Abstimmung mögliche Zwischenfrequenzänderung bezeichnet.

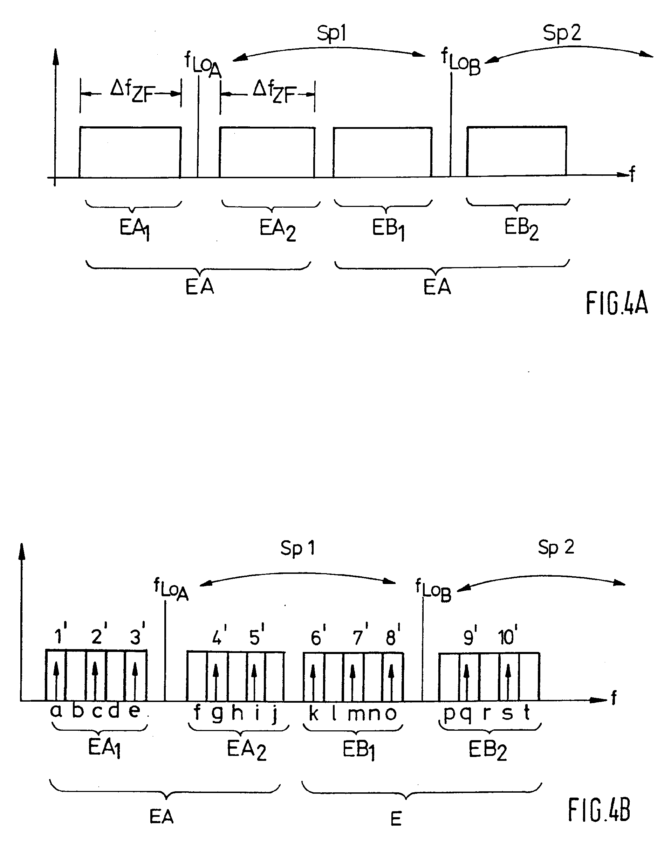

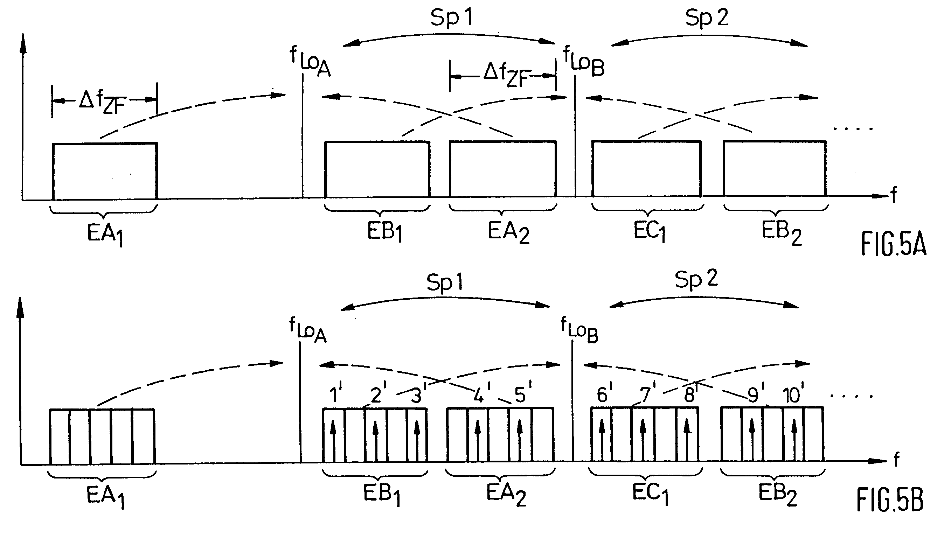

Bei dem erfindungsgemäßen optischen Überlagerungsempfänger ist vorgesehen, daß der optische Oszillator 2 nicht kontinuierlich, sonder nur in Sprüngen Sp 1, Sp 2 (Figur 4, Figur 5) abstimmbar ist. Die kontinuierliche Abstimmung erfolgt in einer variablen ZF-Stufe. In Figur 4a ist gezeigt, welche Empfangs-Frequenzbereiche durch die erfindungsgemäße Abstimmbarkeit des neuen Überlagerungsempfängers sich ergeben. Auf einer Frequenzachse ist eine Frequenz $f_{LOA}$ des Oszillators 2 und eine weitere Frequenz $f_{LOB}$ des Oszillators 2 markiert. Zwischen diesen beiden Frequenzen liegt ein Sprung Sp 1. Ein weiterer Sprung Sp 2 ist angedeutet. Linksseitig des Frequenz $f_{LOA}$ liegt ein Empfangsabschnitt $EA_1$, rechtsseitig von der Frequenz $f_{LOA}$ ein Empfangsabschnitt $EA_2$. $EA_1$ und $EA_2$ sind Spiegelfrequenzabschnitte zueinander und bilden zusammen einen Empfangsbereich EA.

Linksseitig der Frequenz $f_{LOB}$ liegt ein Empfangsabschnitt $EB_1$ und rechtsseitig davon ein Empfangsabschnitt $EB_2$. $EB_1$ und $EB_2$ sind Spiegelfrequenzabschnitte zueinander und bilden zusammen einen Empfangsbereich EB.

Damit ist eine quasi-kontinuierliche Erfassung eines Eingangs-Frequenzbandes möglich.

Die erfindungsgemäße Ausgestaltung hat den Vorteil, daß viele Typen von hochstabilen Oszillatoren, die zu einer sprunghaften Abstimmung neigen, zur Verwendung als lokaler Oszillator zur Verfügung stehen. Für optische Überlagerungsempfänger können insbesondere Halbleiterlaser eingesetzt werden. Deren sprunghafte Abstimmtendenz, die normalerweise unerwünscht ist, wird erfindungsgemäß gezielt ausgenutzt. Z.B. springt ein Ext. Cavity Laser mit einer Cavity-Länge von 12 mm aufgrund des Modenabstandes (der Longitudinalmoden) um typischerweise 0,1 nm, d.h. um 12,5 GHz (bei 1550 nm). Weiterhin sind abstimmbare Erbium-Faser-Ringlaser geeignet. Alle diese Lasertypen können frequenzmäßig auf Molekülresonanzen stabilisiert werden.

Das Prinzip einer solchen Stabilisierung ist bekannt aus "Electronics Letters", Vol. 24, August 1988, No. 16, Seiten 1048 bis 1049. Viele dieser Resonanzen haben Vieldeutigkeiten im GHz-Bereich, z.B. im Absorptionsspektrum von Azetylen. Dies ist an sich bekannt aus "IEEE Phot. Techn. Letters, Vol. 1, No. 10, October 1989, Seiten 281 bis 284.

Mit Vorzug kann als ZF-Stufe ein abstimmbarer Mikrowellenempfänger eingesetzt werden. Geschieht die Abstimmung wie in Figur 4a gezeigt, so sollte die ZF-Stufe, also der abstimmbare Mikrowellenempfänger, von nahezu 0 GHz bis z.B. 6 GHz durchstimmbar sein. Schwierig ist es dabei, die tiefe untere Grenzfrequenz technisch zu erreichen.

Anhand von Figur 5a wird ein Ausführungsbeispiel der Erfindung beschrieben, bei dem die ZF-Stufe nicht bis nahezu 0 GHz abgestimmt werden muß. Bei diesem Ausführungsbeispiel sind die Sprünge der Frequenz des Oszillators 2 und der Abstimmbereich der ZF-Stufe so gewählt, daß die durch eine Oszillatorfrequenz gegebenen Empfangsabschnitte mit Empfangsabschnitten, die durch andere Oszillatorfrequenzen gegeben sind, verschachtelt sind.

Anhand von Figur 5a wird dies nun erläutert. Die Figur 5a zeigt, daß die den Oszillatorfrequenzen $f_{LOA}$ und $f_{LOB}$ zugeordneten Empfangsabschnitte $EA_1$, $EA_2$ bzw. $EB_1$, $EB_2$ derart geschachtelt angeordnet sind, daß zwischen einem Empfangsabschnitt (z.B. $EB_1$) und zugehörigen Spiegelfrequenz-Empfangsabschnitt (z.B. $EB_2$) Empfangsabschnitte liegen, die anderen Oszillatorfrequenzen zugeordnet sind. Z.B. liegt zwischen $EB_1$ und $EB_2$, die beide der Oszillatorfrequenz $f_{LOB}$ zugeordnet sind, ein Empfangsabschnitt $EA_2$, der einer Oszillatorfrequenz $F_{LOA}$ zugeordnet ist, und ein Empfangsabschnitt $EC_1$, der einer Oszillatorfrequenz $f_{LOC}$ (nicht gezeigt) zugeordnet ist.

Auf diese Weise ist es ebenso wie bei der Abstimmung des Überlagerungsempfängers gemäß Figur 4a möglich, einen großen Frequenzbereich quasi-kontinuierlich zu erfassen, hier allerdings mit dem Vorteil, daß die Zwischenfrequenz nicht bis nahezu 0 abgstimmt werden muß, sondern nur im Bereich von etwa einer Oktave von z.B. 3 bis 6 GHz.

Anhand der Figuren 4a und 5a wurde gezeigt, welche Empfangsfrequenzen durch die erfindungsgemäße Abstimmung des Überlagerungsempfängers erfaßbar sind. Die Frequenz fe eines Empfangssignals des erfindungsgemäßen Überlagerungsempfängers kann also beliebige Werte innerhalb der in Figur 4a und Figur 5a gezeigten Empfangsabschnitte annehmen.

Anhand der Figuren 4b und 5b wird nun gezeigt, wie bei einem Vielkanalbetrieb die Frequenzen der gleichzeitig von einem Sender zu dem erfindungsgemäßen Überlagerungsempfänger übertragenen Signale gemäß einer vorteilhaften Ausgestaltung der Erfindung gewählt werden. Innerhalb des erfaßbaren Frequenzbereichs des Überlagerungsempfängers, zu dem, wie die Figuren 5a und 4a zeigen, auch Spiegelfrequenz-Empfangsabschnitte gehören, verwendet der mit dem Überlagerungsempfänger zusammenarbeitende Sender nur solche Frequenzen, die keine Spiegelfrequenzen von anderen belegten Frequenzen sind. In anderen Worten: Die Belegung der Frequenzen mit Kanälen geschieht so, daß die Spiegelfrequenz einer belegten Frequenz unbelegt bleibt.

Würde der Sender zwei Frequenzen belegen, die im Empfänger Spiegelfrequenzen zueinander sind, so würde der Empfänger die beiden Kanäle auf dieselbe Zwischenfrequenz umsetzen, und ein eindeutiger Signalempfang wäre nicht mehr möglich. Die erfindungsgemäße sendeseitige Kanalbelegung sorgt also dafür, daß empfangsseitig ein eindeutiger Signalempfang gewährleistet ist.

In Figur 4b ist die erfindungsgemäße sendeseitige Kanalbelegung veranschaulicht. Jeder der Empfangsabschnitte, auch derjenigen, die zueinander Spiegelfrequenz-Empfangsabschnitte sind, ist dabei in sendeseitig belegbare Kanäle unterteilt. Im Beispiel der Figur 4b sind also Frequenzen a bis t grundsätzlich sendeseitig belegbar. Erfindungsgemäß belegt der Sender aber nur solche Frequenzen mit Kanälen, die nicht Spiegelfrequenzen zueinander sind. Die vom Sender belegten Frequenzen sind mit einem Pfeil gekennzeichnet, und die dadurch eingerichteten Kanäle sind mit Ziffern 1', 2' bis 10' numeriert. Beispielsweise bleibt, wenn eine Frequenz a aus dem Empfangsabschnitt $EA_1$ belegt wird, die zugehörige Spiegelfrequenz j im Empfangsabschnitt $EA_2$ unbelegt, was durch die eingezeichneten Pfeile angedeutet ist. Damit ist ein eindeutiger Empfang von Signalen sichergestellt, auch wenn im Empfänger die Spiegelfrequenzen nicht unterdrückt werden.

Eine entsprechende Belegung von Frequenzen aus den Empfangsabschnitten ist auch möglich, wenn sich die Empfangsabschnitte durch die in Figur 5a gezeigte Abstimmung des Überlagerungsempfängers ergeben. In Figur 5b ist die entsprechende Belegung von Frequenzen aus den Empfangsabschnitten $EB_1$, $EA_2$, $EC_1$ und $EB_2$ als Beispiel eingezeichnet. Da diese Empfangsabschnitte einen großen Frequenzbereich nahezu lückenlos überdecken, können im Sender die Frequenzen der Kanäle äquidistant gewählt werden, was Vorteile hinsichtlich der Stabilisierung der Frequenzen hat. Auf den Empfangsbereich $EA_1$ wird, wenn eine äquidistante Belegung der Empfangsfrequenzen mit Kanälen gewünscht ist, verzichtet.

In den Ausführungsbeispielen der Erfindung gemäß den Figuren 4 und 5 sind die Sprünge SP der Frequenz des Oszillators 2 und der Abstimmbereich $\Delta f_{ZF}$ der ZF-Stufe derart gewählt, daß sich die einer Oszillatorfrequenz zugeordneten Empfangsabschnitte einschießlich deren Spiegelfrequenz-Empfangsabschnitte nicht überlappen.

## Patentansprüche

1. Optischer Überlagerungsempfänger, bevorzugt für Vielkanalsysteme, mit einer Mischstufe (1), die ein Empfangssignal sowie ein Oszillatorsignal eines optischen Oszillators (2) erhält und mit einer an die Mischstufe(1) angeschlossenen Zwischenfrequenz-Stufe (3),
   **dadurch gekennzeichnet,** daß der optische Oszillator (2) diskontinuierlich, sprunghaft und die Zwischenfrequenz-Stufe (3) kontinuierlich abstimmbar ist.

2. Empfänger nach Anspruch 1, dadurch gekennzeichnet, daß die Sprünge (SP 1, SP 2) der Frequenz des optischen Oszillators (2) und der Abstimmbereich ($\Delta f_{ZF}$) der Zwischenfrequenz-Stufe (3) derart gewählt sind, daß sich die den verschiedenen möglichen Frequenzen ($f_{LOA}$, $f_{LOB}$) des Oszillators (2) entsprechenden Empfangsabschnitte (EA$_1$, EA$_2$, EB$_1$, EB$_2$) einschließlich der ihnen zugeordneten Spiegelfrequenzabschnitte nicht überlappen (Figur 4, Figur 5).

3. Empfänger nach Anspruch 1 oder 2, dadurch gekennzeichnet, daß zur sprunghaften Abstimmung des optischen Oszillators Atom- oder Molekülresonanzen ausgenutzt werden.

4. Empfänger nach Anspruch 3, dadurch gekennzeichnet, daß als optischer Oszillator (2) ein "Ext. Cavity Laser", verwendet ist.

5. Empfänger nach einem der vorstehenden Ansprüche, dadurch gekennzeichnet, daß als Zwischenfrequenz-Stufe (3) ein abstimmbarer Mikrowellenempfänger verwendet ist.

6. Empfänger nach einem der vorstehenden Ansprüche, dadurch gekennzeichnet, daß die Sprünge der Frequenz des Oszilators (2) und der Abstimmbereich der Zwischenfrequenz-Stufe (3) so gewählt sind, daß die den verschiedenen möglichen Frequenzen ($f_{LOA}$, $f_{LOB}$) des Oszillators (2) entsprechenden Empfangsabschnitte (EA$_1$, EB$_1$, EC$_1$) und die ihnen zugeordneten Spiegelfrequenzabschnitte (EA$_2$, EB$_2$) derart geschachtelt angeordnet sind, daß zwischen einem Empfangsabschnitt (EB$_1$) und dem zugehörigen Spiegelfrequenzabschnitt (EB$_2$) Empfangsabschnitte (EC$_1$, EA$_2$) liegen, die benachbarten Oszillatorfrequenzen ($f_{LOA}$) zugeordnet sind (Figur 5).

7. Optisches Nachrichtenübertragungssystem zur Vielkanalübertragung, mit einem optischen Sender und einem optischen Überlagerungsempfänger, der eine Mischstufe (1), die ein Empfangssignal sowie ein Oszillatorsignal eines optischen Oszillators (2) erhält, und eine an die Mischstufe (1) angeschlossene Zwischenfrequenz-Stufe (3) hat, wobei der optische Oszillator (2) diskontinuierlich, sprunghaft und die Zwischenfrequenz-Stufe (3) kontinuierlich abstimmbar ist, und wobei der Sender aus dem durch die kontinuierliche Abstimmung der Zwischenfrequenz-Stufe (3) des Überlagerungsempfängers erfaßbaren Frequenzbereich, der auch Spiegelfrequenzen von erfaßbaren Frequenzen umfaßt, Frequenzen derart mit Kanälen (1', 2', 3', ..., 10') belegt, daß Spiegelfrequenzen von belegten Frequenzen unbelegt bleiben.

## Claims

1. Optical heterodyne receiver, preferably for multi-channel systems, having a mixer stage (1) which receives a receiving signal and an oscillator signal from an optical oscillator (2) and having an intermediate frequency stage (3) connected to the mixer stage (1), characterized in that the optical oscillator (2) is tunable discontinuously, in jumps and the intermediate frequency stage (3) is tunable continuously.

2. Receiver according to Claim 1, characterized in that the frequency jumps (SP 1, SP 2) of the optical oscillator (2) and the tuning range ($\Delta f_{ZF}$) of the intermediate frequency stage (3) are selected in such a way that the receiving portions (EA$_1$, EA$_2$, EB$_1$, EB$_2$) corresponding to the various possible frequencies ($f_{LOA}$, $f_{LOB}$) of the oscillator (2) including the image frequency portions associated therewith do not overlap one another (Figure 4, Figure 5).

3. Receiver according to Claim 1 or 2, characterized in that atomic or molecular resonances are utilized for tuning the optical oscillator in jumps.

4. Receiver according to Claim 3, characterized in that an "ext. cavity laser" is used as the optical oscillator (2).

5. Receiver according to any one of the preceding claims, characterized in that a tunable microwave receiver is used as the intermediate frequency stage (3).

6. Receiver according to any one of the preceding claims, characterized in that the frequency jumps of the oscillator (2) and the tuning range of the intermediate frequency stage (3) are selected in such a way that the receiving portions ($EA_1$, $EB_1$, $EC_1$) corresponding to the various possible frequencies ($f_{LOA}$, $f_{LOB}$) of the oscillator (2) and the image frequency portions ($EA_2$, $EB_2$) associated therewith are disposed interleaved in such a way that receiving portions ($EC_1$, $EA_2$) which are associated with adjacent oscillator frequencies ($f_{LOA}$) lie between one receiving portion ($EB_1$) and the associated image frequency portion ($EB_2$) (Figure 5).

7. Optical message transmission system for multi-channel transmission having an optical transmitter and an optical heterodyne receiver which has a mixer stage (1), which receives a receiving signal and an oscillator signal of an optical oscillator (2), and an intermediate frequency stage (3) connected to the mixer stage (1), it being possible to tune the optical oscillator (2) discontinuously, in jumps and the intermediate frequency stage (3) continuously, and the transmitter assigning to channels (1', 2', 3', ..., 10') frequencies from the frequency range which can be detected by the continuous tuning of the intermediate frequency stage (3) of the heterodyne receiver and which also comprises image frequencies of detectable frequencies in such a way that image frequencies of assigned frequencies are not assigned.

**Revendications**

1. Récepteur superhétérodyne optique, de préférence pour systèmes multivoies, comportant un étage mélangeur (1) qui reçoit un signal de réception ainsi qu'un signal d'un oscillateur optique (2) et comportant un étage de fréquence intermédiaire (3) relié à l'étage mélangeur (1),
   caractérisé par le fait que l'oscillateur optique (2) peut s'accorder de façon discontinue, par sauts et que l'étage de fréquence intermédiaire (3) peut s'accorder de façon continue.

2. Récepteur selon la revendication 1, caractérisé par le fait que les sauts (SP 1, SP 2) de la fréquence de l'oscillateur optique (2) et de la plage d'accord ($\Delta f_{ZF}$) de l'étage de fréquence intermédiaire (3) sont choisis de façon que les portions de plage de fréquences de réception ($EA_1$, $EA_2$, $EB_1$, $EB_2$) correspondant aux différentes fréquences possibles ($f_{LOA}$, $f_{LOB}$) de l'oscillateur (2), y compris les portions de plage de leurs fréquences-images correspondantes, ne se recouvrent pas (figure 4, figure 5).

3. Récepteur selon la revendication 1 ou 2, caractérisé par le fait que pour l'accord, par sauts, de l'oscillateur optique, on utilise des résonances atomiques ou moléculaires.

4. Récepteur selon la revendication 3, caractérisé par le fait que comme oscillateur optique (2) on utilise un laser à cavité extérieure "Ext. Cavity Laser".

5. Récepteur selon l'une des revendications précédentes, caractérisé par le fait que comme étage de fréquence intermédiaire (3) on utilise un récepteur hyperfréquence accordable.

6. Récepteur selon l'une des revendications précédentes, caractérisé par le fait que les sauts de la fréquence de l'oscillateur (2) et de la plage d'accord de l'étage de fréquence intermédiaire (3) sont choisis de façon que les portions de plage de fréquences de réception ($EA_1$, $EB_1$, $EC_1$) correspondant aux différentes fréquences possibles ($f_{LOA}$, $f_{LOB}$) de l'oscillateur (2), et les portions de plage de fréquences-images ($EA_2$, $EB_2$) qui leur correspondent sont disposées, intercalées de façon qu'entre une portion de plage de fréquences de réception ($EB_1$) et la portion correspondante ($EB_2$) de plage de fréquences-images, se trouvent des portions ($EC_1$, $EA_2$) de plage de fréquences de réception qui correspondent à des fréquences de l'oscillateur ($f_{LOA}$) voisines (figure 5).

7. Système de transmission optique de l'information pour transmission multivoie, comportant un émetteur optique et un récepteur hétérodyne optique qui comporte un étage mélangeur (1), qui reçoit un signal de réception et un signal d'un oscillateur optique (2), ainsi qu'un étage de fréquence intermédiaire (3) relié à l'étage mélangeur (1), système dans lequel l'oscillateur optique (2) peut être accordé de façon discontinue, par sauts et l'étage de fréquence intermédiaire (3) peut l'être de façon continue, et dans lequel l'émetteur, sur la plage de fréquences qui peut être détectée par l'accord continu de l'étage de fréquence intermédiaire (3) du récepteur superhétérodyne et qui contient également des fréquences-images des fréquences détectables, occupe des fréquences avec des voies (1', 2', 3', ..., 10') de façon telle que les fréquences-images des fréquences occupées restent inoccupées.

FIG.1

FIG.2

FIG.3

FIG.4A

FIG.4B

FIG.5A

FIG.5B

EP 0 485 812 B1